Europäisches Patentamt

European Patent Office

Office européen des brevets

(11) Numéro de publication: **0 347 264**
**A1**

## (12) DEMANDE DE BREVET EUROPEEN

(21) Numéro de dépôt: **89400249.2**

(22) Date de dépôt: **30.01.89**

(51) Int. Cl.⁴: **A 23 N 15/00**

(30) Priorité: **14.06.88 FR 8807935**

(43) Date de publication de la demande:
**20.12.89 Bulletin 89/51**

(84) Etats contractants désignés:
**BE CH DE ES GB IT LI NL**

(71) Demandeur: **FRUIDOR, Société Anonyme**
**21 rue du Pont-Neuf**
**F-75039 Paris Cédex 01 (FR)**

(72) Inventeur: **Clayes, Christian**
**Les Ratacans Allée Auguste Rodin**
**F-84300 Cavaillon (FR)**

(74) Mandataire: **Kügele, Bernhard**
**NOVAPAT-CABINET CHEREAU 63 bis, boulevard**
**Bessiéres**
**F-75017 Paris (FR)**

(54) **Procédé de parage de légumes et dispositif et installation pour sa mise en oeuvre.**

(57) L'invention concerne un procédé de parage de légumes, en particulier de légumes branche et feuillus tels que laitues, chicorées, batavias, céleris branches, choux, fenouils, etc.

Le procédé selon l'invention est caractérisé par le fait qu'on maintient mécaniquement le légume (4) et on fait pivoter et coulisser axialement par rapport au légume (4) un outil tranchant (21) déformé au cours de sa rotation.

Application à des dispositifs et installations de parage de légumes.

Fig. 5

## Description

### PROCEDE DE PARAGE DE LEGUMES ET DISPOSITIF ET INSTALLATION POUR SA MISE EN OEUVRE

L'invention concerne un procédé de parage de légumes, en particulier de légumes branche et feuilles tels que laitues, chicorées, batavias, céleris branches, choux, fenouils, etc., ainsi que les dispositifs et installations pour la mise en oeuvre de ce procédé.

Le parage des légumes tels que des salades est l'opération qui consiste à préparer le légume pour sa consommation, en particulier à en séparer les parties non consommables et/ou inesthétiques.

Ce parage, habituellement effectué manuellement, comporte les opérations suivantes :

a) l'effeuillage qui consiste à enlever les feuilles périphériques jusqu'à la partie interne du légume qu'on désire conserver;

b) l'étrognage qui consiste à séparer la portion dure de liaison du légume à sa racine;

c) enfin une opération de coupe.

Le développement de la vente de légumes parés et emballés, prêts à être consommés, se heurte aux coûts élevés de main d'oeuvre et de matière liés aux procédés manuels de parage qui, appliqués à une échelle industrielle, rendent particulièrement sensibles la fatigue des ouvrières. Celles-ci ont tendance à supprimer une partie trop importante du légume pour laisser une partie consommable réduite. Ces procédés manuels, ne permettent pas d'assurer une rentabilité et une efficacité suffisantes, en particulier pour un traitement rapide des récoltes livrées afin d'assurer un emballage et une livraison très rapides.

La présente invention se propose de fournir un procédé mécanique de parage de légumes qui permette une automatisation de cette opération dans une chaîne-transfert, afin d'assurer un traitement rapide, économique et efficace des légumes, ce procédé permettant en outre une grande variété d'utilisations en fonction du type et/ou des dimensions du légume, grâce à la versatilité de l'outil utilisé pour la mise en oeuvre du procédé.

A cet effet, le procédé selon l'invention est caractérisé par le fait qu'on maintient mécaniquement le légume et on fait pivoter et coulisser axialement par rapport au légume un outil tranchant déformé au cours de sa rotation. Ce procédé permet d'effectuer mécaniquement de manière précise et sûre la séparation des feuilles périphériques du légume ainsi que, dans le cas de l'étrognage, la séparation de la portion dure de liaison à la racine, grâce à la déformation contrôlée de l'outil de coupe pivotant. Cette déformation contrôlée permet en outre d'adapter facilement, éventuellement automatiquement, l'outil à des légumes différents et/ou de types différents.

La commande de déformation de l'outil déformable peut être de différents types. Selon une forme de mise en oeuvre préférée du procédé selon l'invention, l'outil est déformé par force centrifuge. C'est la vitesse de rotation de l'outil qui détermine alors sa forme en fonctionnement.

Cependant, la déformation de l'outil peut également être effectuée par des moyens mécaniques annexes commandés électriquement, pneumatiquement, hydrauliquement, etc.

Le contrôle de la forme de l'outil peut être opéré par divers moyens, par exemple mécaniquement, ou par lecture optique de couleurs.

Le légume ayant subi l'opération d'effeuillage précédente possède une forme de révolution sphérique, cylindrique, conique ou, de préférence du type dit "patatoïde", c'est-à-dire à génératrice curviligne.

Afin d'éliminer les feuilles extérieures pouvant subsister après l'opération d'effeuillage précédente, on peut prévoir une opération suivante caractérisée par le fait qu'on donne au légume effeuillé une forme cylindrique et on le fait avancer contre une couronne coupante rotative coaxiale.

Afin de séparer le légume ainsi effeuillé, l'invention prévoit qu'on amène le légume sortant de ladite couronne en regard d'au moins un couteau rotatif à axe de rotation orthogonal à l'axe de ladite couronne.

Pour effectuer l'étrognage (ou parage de la racine), l'invention prévoit qu'on utilise, de manière connue en soi, un outil pivotant du type toupie fixe, au lieu d'un outil déformable.

L'invention concerne également un dispositif et une installation pour la mise en oeuvre du procédé selon l'invention.

L'invention sera bien comprise à la lecture de la description suivante faite en se référant aux dessins annexés dans lesquels :

La figure 1 est une vue schématique en élévation d'une installation de parage selon un exemple de réalisation de l'invention;

La figure 2 est une vue en plan de l'installation de la figure 1;

La figure 3 est une vue schématique en plan d'une tête de préhension, la partie supérieure représentant la pince en position ouverte et la partie inférieure représentant la pince en position fermée;

La figure 4 est une vue schématique en plan d'un poste d'étrognage;

La figure 5 est une vue schématique d'un poste d'effeuillage; et

La figure 6 est une vue schématique d'un poste de retrait de feuillage extérieur.

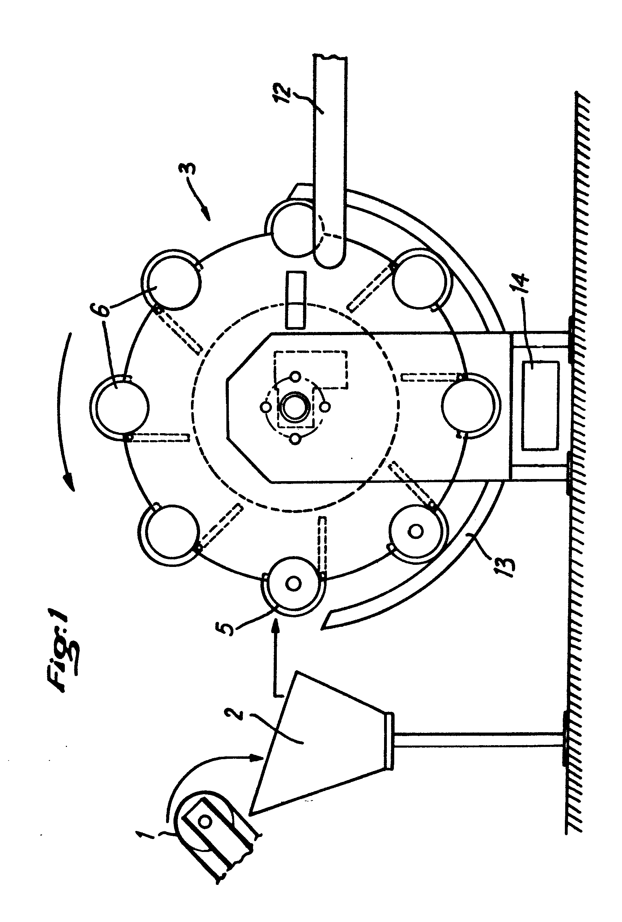

L'installation représentée aux figures 1 et 2 comprend un tapis de chargement 1 d'une banque de réception 2 de laquelle les légumes à parer sont introduits manuellement dans un carrousel de traitement 3 qui, dans l'exemple décrit, est monté vertical pour des raisons d'économie d'encombrement. Le carrousel 3, qui constitue une machine-transfert, peut être horizontal ou incliné. Il peut aussi être remplacé par une machine-transfert non circulaire, par exemple rectiligne.

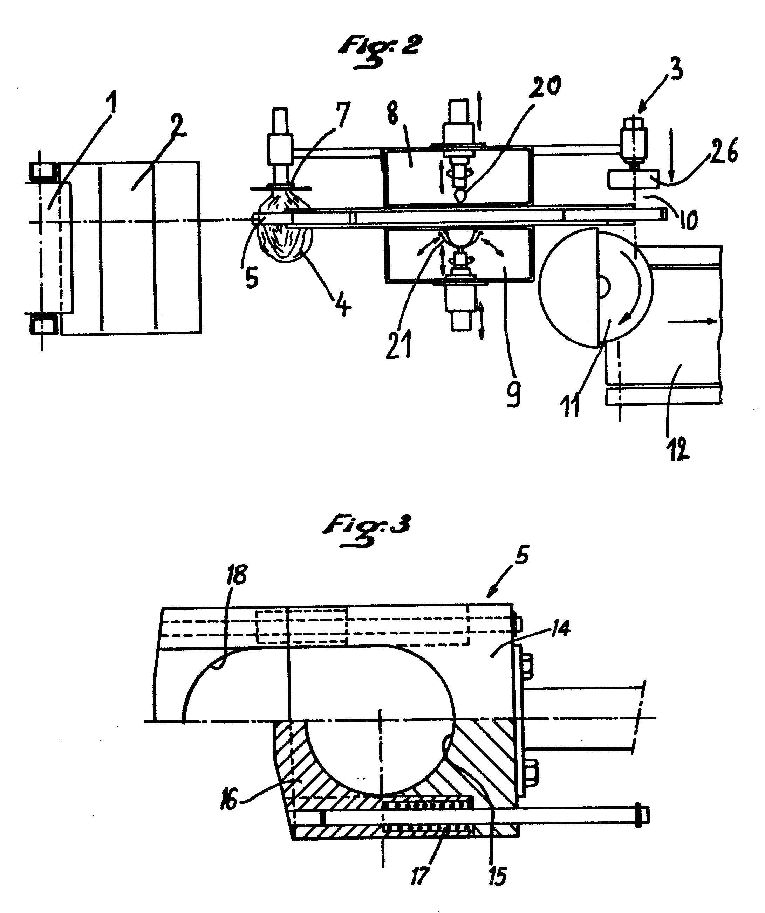

Le légume à traiter 4, par exemple une salade, est saisi dans une tête de préhension 5 représentée plus en détail à la figure 3, qui l'amène successivement à divers postes de travail 6. Une butée réglable 7 sert au positionnement du légume 4.

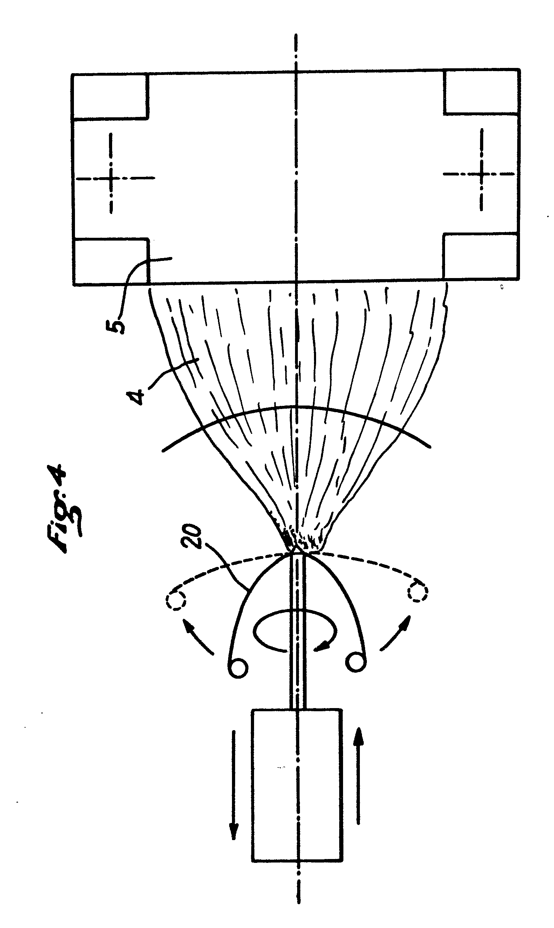

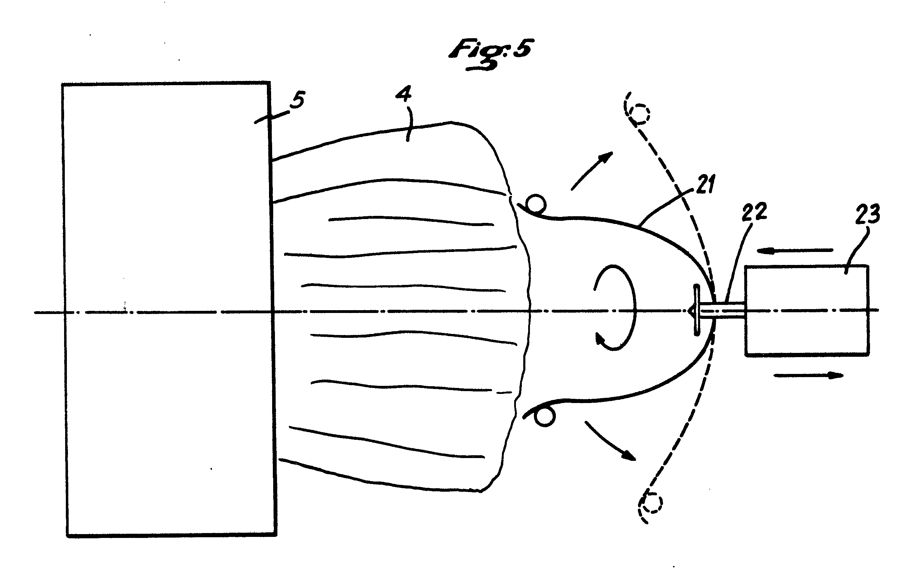

Le légume passe par un poste d'étrognage 8 qui sera décrit plus en détail en relation avec la figure 4, puis par un poste d'effeuillage 9 qui sera explicité en référence à la figure 5.

Le légume parvient à un poste 10 de retrait du feuillage extérieur où, poussé par un vérin 11, il subira une coupe périphérique, comme on le verra plus en détail à propos de la figure 8. Le légume 4 est séparé en deux par un disque de coupe 11 et entraîné par un tapis d'inspection 12 vers une station de conditionnement (non représentée).

La partie inférieure du carrousel 3 est fermée par un carter 13 qui permet de recueillir les déchets qui sont évacués par un tapis 14.

La tête de préhension 5, représentée à la figure 3, comporte un support fixe 14 muni d'une ouverture semi-circulaire 15 et par rapport auquel peut coulisser une mâchoire 16 rappelée par un ressort 17. La mâchoire 16 comporte une ouverture semi-circulaire 18 de sorte que, en position fermée (partie inférieure de la figure), les deux ouvertures 15 et 18 forment un cercle de serrage d'un légume et, en position d'ouverture (partie supérieure de la figure), les deux ouvertures 15 et 18 sont écartées pour libérer le légume.

A la figure 4, le légume 4, maintenu par la tête de préhension 5, est soumis à un étrognage par un outil 20 monté pivotant et coulissant axialement par rapport au légume 4. L'outil 20 peut être, comme représenté à la figure 1, une toupie classique. De préférence, il est constitué par un outil variable qui va être décrit plus en détail en référence à la figure 5.

Au poste figuré à la figure 5, le légume 4 maintenu par la tête de préhension 5, est soumis à une opération d'effeuillage périphérique au moyen d'un outil déformable 21 conforme à l'invention. Dans l'exemple représenté, l'outil 21 est formé par une lame souple en forme de cloche montée rotative sur un arbre 22 porté par un bloc-support coulissant 23 qui porte le moteur d'entraînement de l'outil 21 et peut se déplacer axialement par rapport à la tête de préhension 5.

La lame souple 21 se déforme radialement en fonction de la vitesse de rotation de l'arbre 22, par l'effet de la force centrifuge résultant de son poids propre et de masselottes d'équilibrage 24 fixées au voisinage de son bord libre. Ainsi, on peut donner à la lame 21 une forme en cloche plus ou moins évasée qui déterminera, au cours de l'avance de l'outil 21, la portion périphérique détachée du légume 4 au cours de l'avance du bloc-support 23 de la droite vers la gauche (sur le dessin).

Au lieu d'une lame souple, on peut utiliser une lame rigide articulée sur l'arbre 22 et s'écartant plus ou moins de l'axe de cet arbre en fonction de la vitesse de rotation. La lame peut être articulée en un ou plusieurs points intermédiaires.

Comme on l'a indiqué précédemment, la forme de la lame 21 peut être rectiligne, en arc de cercle, et avoir un déplacement parallèle ou oblique par rapport à l'axe de l'arbre 22 grâce à des guides de coulissement (non représentés). On peut ainsi obtenir des formes du légume effeuillé très variées telles que tronconiques, sphériques, etc.

La déformation de l'outil 21 peut être effectuée autrement que par l'utilisation de la force centrifuge, en particulier par l'utilisation de moyens mécaniques de déformation de la lame ou de déplacement de la lame. Ces moyens mécaniques peuvent être actionnés électriquement, hydrauliquement, mécaniquement, ou par tout mode convenable.

Le contrôle de la déformation et/ou du déplacement de l'outil déformable peut être effectué manuellement, mécaniquement, ou automatiquement. Dans le cas d'un contrôle automatique, on peut utiliser par exemple un lecteur de couleurs détectant par exemple l'apparition du jaune d'une salade. On économise ainsi la matière au maximum.

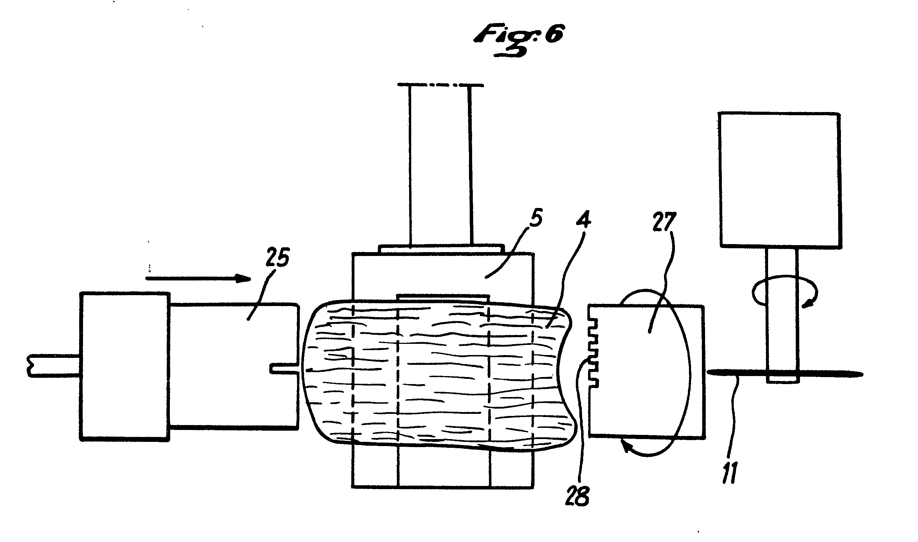

Le légume 4 ayant subi l'effeuillage qui vient d'être décrit peut ensuite être soumis à une opération de retrait du feuillage extérieur n'ayant pas été séparé par l'opération d'effeuillage précédente. Cette opération est illustrée à la figure 6.

Le légume 4 est poussé sous une forme sensiblement cylindrique de révolution à travers l'ouverture circulaire de la tête de préhension 5. Ce déplacement est effectué par un pousse-légume 25 actionné par un vérin-tampon 26 (représenté à la figure 2).

Une couronne circulaire rotative 27 est disposée à la sortie de la tête de préhension 5 coaxialement à l'axe de l'ouverture circulaire de cette tête 5. La couronne 27 est munie, en regard de la tête de préhension 5, d'une arête coupante 28, par exemple munie de dents, de sorte que le légume 4, poussé par le pousse-légume 25, traverse la couronne 27 dont l'arête coupante sépare le feuillage qui se trouve à l'extérieur de la couronne.

Un couteau rotatif 11 peut être disposé à la sortie de la couronne 27, par exemple, dans un plan passant par l'axe de la couronne, de manière à couper en deux le légume 4 complètement effeuillé. Les morceaux du légume peuvent alors tomber sur le tapis d'inspection 12 où il est examiné et trié visuellement ou, éventuellement, automatiquement.

Bien que l'invention ait été décrite en relation à un exemple de réalisation, il est bien entendu qu'on peut y apporter toute modification sans s'écarter du but et de l'esprit de l'invention.

**Revendications**

1 - Procédé de parage de légumes, en particulier de légumes branche et feuillus tels que laitues, chicorées, batavias, céleris branches, choux, fenouils, etc. caractérisé par le fait qu'on maintient mécaniquement le légume (4) et on fait pivoter et coulisser axialement par rapport au légume (4) un outil tranchant (21) déformé au cours de sa rotation.

2 - Procédé selon la revendication 1, caractérisé par le fait que l'outil (21) est déformé par force centrifuge.

3 - Procédé selon la revendication 1, caractérisé par le fait que l'outil (21) est déformé mécaniquement.

4 - Procédé selon l'une des revendications 1 à 3, caractérisé par le fait que l'outil déformable est constitué par une lame souple (21).

5 - Procédé selon l'une des revendications 1 à 3, caractérisé par le fait que l'outil déformable est constitué par une lame rigide articulée à une extrémité et/ou en au moins un point intermédiaire.

6 - Procédé selon l'une des revendications 1 à 5, caractérisé par le fait que l'outil (21) est rectiligne.

7 - Procédé selon l'une des revendications 1 à 5, caractérisé par le fait que l'outil (21) est curviligne, par exemple en forme de cloche.

8 - Procédé selon l'une des revendications 1 à 7, caractérisé par le fait que la déformation de l'outil (21) est contrôlée automatiquement par un lecteur de couleurs.

9 - Dispositif pour la mise en oeuvre du procédé selon l'une des revendications 1 à 8, caractérisé par le fait qu'il comprend une tête de préhension (5) du légume (4) et un outil rotatif déformable (21) mobile coaxialement audit légume (4).

10 - Dispositif selon la revendication 9, caractérisé par le fait que l'outil (21) est déformé par force centrifuge.

11 - Dispositif selon la revendication 9, caractérisé par le fait que l'outil (21) est déformé mécaniquement.

12 - Dispositif selon l'une des revendications 9 à 11, caractérisé par le fait que l'outil déformable est constitué par une lame souple (21).

13 - Dispositif selon l'une des revendications 9 à 11, caractérisé par le fait que l'outil déformable est constitué par une lame rigide articulée à une extrémité et/ou en au moins un point intermédiaire.

14 - Dispositif selon l'une des revendications 9 à 13,, caractérisé par le fait que l'outil (21) est rectiligne.

15 - Dispositif selon l'une des revendications 9 à 13, caractérisé par le fait que l'outil (21) est curviligne, par exemple en forme de cloche.

16 - Installation pour la mise en oeuvre du procédé selon l'une des revendications 1 à 7, caractérisée par le fait qu'elle est constituée par une machine-transfert dont un des postes (6) est constitué par un dispositif selon l'une des revendications 8 à 15.

17 - Installation selon la revendication 16, caractérisée par le fait qu'elle comporte un poste d'étrognage.

18 - Installation selon la revendication 17, caractérisée par le fait que le poste d'étrognage est constitué par un dispositif selon l'une des revendications 8 à 15.

19 - Installation selon l'une des revendications 16 à 18, caractérisé par le fait qu'elle comprend un poste de retrait du feuillage extérieur constitué par une couronne circulaire rotative (27) à arête coupante (28) et un organe de poussée (25) du légume (4) à travers ladite couronne (27).

Fig.1

EP 0 347 264 A1

*Fig. 2*

*Fig. 3*

Fig.4

Fig.5

Fig. 6

EP 0 347 264 A1

RAPPORT DE RECHERCHE EUROPEENNE

Numero de la demande

EP    89 40 0249

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| X | FR-A-2010184 (TOMELLERI) <br> * page 2, ligne 15 – page 5; figures 1-7 * | 1, 3, 5, 9, 11, 13, 14, 16, 17 | A23N15/00 |
| X | FR-A-2191851 (AUBERT) <br> * page 3, ligne 6 – page 7; figures 1-7 * | 1, 2, 3, 5, 7, 9, 10, 13, 15, 17 | |
| X | US-A-2227794 (PHILLIPS) <br> * colonne 1, ligne 40 – colonne 3, ligne 35; figures 1-6 * | 1, 3, 5, 7, 9, 11, 13, 15, 16 | |
| A | US-A-2785434 (TERRANOVA) <br> * colonne 4, ligne 50 – colonne 5, ligne 20; figures 1-8 * | 1, 3, 4, 7, 9, 11, 12, 15 | |
| A | FR-A-2418672 (SO.VE.MAR.CO.EUROPE) <br> * page 2, ligne 30 – page 4; figures 1, 2 * | 1, 2, 5, 6, 10, 13, 14 | DOMAINES TECHNIQUES RECHERCHES (Int. Cl.4 ) <br><br> A23N <br> A01D <br> A22C <br> A47J |

Le présent rapport a été établi pour toutes les revendications

| Lieu de la recherche | Date d'achèvement de la recherche | Examinateur |
|---|---|---|
| LA HAYE | 01 SEPTEMBRE 1989 | VERMANDER R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)